# FASCICULE DE BREVET EUROPEEN

(11) **EP 2 069 102 B1**
(45) Date de publication et mention de la délivrance du brevet: **21.04.2010**
(21) Numéro de dépôt: 07848278.3
(22) Date de dépôt: 21.09.2007
(51) Int. Cl.: B23Q 1/01, B23Q 16/00, B23C 3/00

(54) **DISPOSITIF POUR L'USINAGE EN PLAFOND DE PIECES FIXES**
VORRICHTUNG ZUR ÜBERKOPFBEARBEITUNG FIXIERTER ELEMENTE
DEVICE FOR THE OVERHEAD MACHINING OF FIXED PARTS

(30) Priorité: 21.09.2006 FR 0653875; 21.09.2006 FR 0653873
(43) Date de publication de la demande: 17.06.2009
(73) Titulaire: AIRBUS OPERATIONS (S.A.S), 31060 Toulouse (FR)
(72) Inventeur: GREFFIOZ, André, F-46100 Capdenac (FR); VIVES, Michel, F-31140 Aucamville (FR)
(74) Mandataire: Fourcade, Emmanuelle
(86) Numéro de dépôt international: PCT/FR2007/001549
(87) Numéro de publication internationale: WO 2008/037883

(56) Documents cités:
- EP-A- 1 243 376
- WO-A-97/22436
- AT-B- 411 445
- DE-A1- 4 117 723
- DE-A1- 19 650 360
- DE-A1- 19 839 503

## Description

La présente invention appartient au domaine des machines outils à commandes numériques pour l'usinage de pièces comportant au moins une grande dimension comme par exemple celle décrite dans le document AT-B-411 445. Plus particulièrement elle concerne un dispositif d'usinage dans lequel la pièce à usiner est positionnée fixe sur une table fixe au-dessus des moyens d'usinage et dans lequel les outils d'usinage se déplacent pendant les opérations d'usinage.

Lorsque les pièces à usiner sont de grandes dimensions, donc plus difficile à fixer et à maintenir dans une position précise, la solution utilisée consiste à maintenir la pièce immobile sur une table également immobile, rigide et très solidement fixée, et à déplacer les outils devant usiner la pièce au moyen d'un portique au-dessus de la table.

Le portique comporte généralement une traverse horizontale soutenue par deux poteaux latéraux.

Le portique se déplace suivant un des axes de la table, le plus allongé, en prenant appui sur des glissières de grande précision fixées à la table et porte une ou plusieurs têtes d'usinage qui se déplacent le long de la traverse horizontale du portique.

La ou les têtes d'usinage sont également aptes à effectuer différents mouvements nécessaires à l'usinage, mouvements de translation pour rapprocher l'outil d'usinage de la table et, dans certains cas, mouvements de rotations pour incliner l'axe de rotation de l'outil d'usinage.

Les machines de ce type sont largement répandues dans l'industrie et permettent d'utiliser des tables de grandes longueurs pouvant dépasser plusieurs dizaines de mètres.

Toutefois ce type de machines présente plusieurs défauts qui compliquent leur utilisation et pénalisent leur rentabilité industrielle.

D'une part les portiques, en raison de la complexité des têtes d'usinage qu'ils supportent et de la nécessaire précision des opérations d'usinage, doivent être le plus rigide possible. Cette rigidité conduit à des portiques très volumineux et très lourds, pouvant atteindre ou dépasser 20 ou 30 tonnes, ce qui en complique les mouvements et limite en pratique les vitesses de déplacement, hors opération d'usinage notamment.

D'autre part les portiques fonctionnent en usinant les pièces posées sur la partie supérieure de la table, par le dessus, ce qui provoque des accumulations de copeaux de matière enlevée par l'usinage et impose de mettre en place des moyens d'évacuation pouvant nécessiter d'interrompre les opérations d'usinage.

La présente invention a pour but de proposer un ensemble comportant une tête d'usinage et des moyens de déplacement de ladite tête de masse très réduite par rapport aux solutions utilisant un portique et de rigidité supérieure adaptée à l'usinage de pièce montée en plafond, c'est à dire sur la face inférieure d'une table de maintien de la pièce en cours d'usinage.

Pour atteindre ce résultat un dispositif d'usinage comporte une tête d'usinage mobile suivant au moins trois axes de translation dits axe longitudinal X, axe transversal Y et axe vertical Z pour usiner une pièce immobile fixée au-dessus de la tête d'usinage suivant l'axe Z. La tête d'usinage est maintenue avec une orientation constante par des moyens de liaison comportant au moins trois bielles articulées. Deux bielles parmi les trois forment avec la tête d'usinage et avec un premier chariot Y sur lesquels elles sont articulées un premier parallélogramme articulé déformable dans le plan défini par les directions X et Z. Au moins une autre bielle parmi les au moins trois est articulée d'une part sur la tête d'usinage et d'autre part sur un second chariot Y de sorte que l'ensemble articulé formé par la au moins une bielle, la tête d'usinage et le second chariot Y soit déformable dans le plan défini par les directions X et Z. Le premier chariot Y est mobile suivant une direction parallèle à l'axe Y sur un premier chariot X mobile suivant une direction parallèle à l'axe X et le second chariot Y est mobile suivant une direction parallèle à l'axe Y sur un second chariot X mobile suivant une direction parallèle à l'axe X.

Dans un mode particulier de réalisation, pour améliorer la rigidité du dispositif, le dispositif comporte au moins quatre bielles articulées dont au moins deux bielles forment avec la tête et le second chariot Y sur lesquels elles sont articulées un second parallélogramme articulé, déformable dans le plan défini par les directions X et Z, similaire au premier parallélogramme articulé formé par au moins deux bielles, la tête d'usinage et le premier chariot Y.

Afin de réaliser les mouvements de la tête d'usinage avec l'amplitude souhaitée en X et Z, la position suivant l'axe X de la tête d'usinage est modifiée par un mouvement simultané des deux chariots X et dans lequel la position suivant l'axe Z de la tête d'usinage est modifiée par un mouvement relatif entre les deux chariots X.

Pour assurer la stabilité de la tête d'usinage et la rigidité nécessaire des parallélogrammes, chaque bielle comporte au moins deux chapes à chacune de ses extrémités articulées dont les axes sont sensiblement parallèles à la direction Y. De préférence les bielles sont de formes trapézoïdales, avec la petite base articulée sur la tête d'usinage et la grande base articulée sur le chariot Y et les bielles sont articulées au moyen de roulements à rouleaux coniques montés en opposition.

Dans une forme préférée de réalisation chaque chariot X comporte une poutre qui supporte des glissières parallèles à l'axe Y sur lesquelles coulissent les chariots Y. Pour obtenir une rigidité adaptée, les poutres ont par exemple une section fermée sensiblement triangulaire ou trapézoïdale, et les faces des poutres sur lesquelles coulissent les chariots Y sont de préférence sensiblement verticales, et de préférence inclinées par rapport à la verticale d'une valeur inférieure ou égale à 45 degrés.

Dans un mode de réalisation les chariots Y sont entraînés en déplacement suivant l'axe Y par des vis à billes situées à la partie supérieure des poutres afin de rapprocher le centre de gravité du dispositif de son centre d'inertie et de limiter les déformations.

Pour assurer les déplacements suivant l'axe X, les chariots X comportent des moyens de guidage qui sont avantageusement portés par des plaques d'extrémité fixées aux extrémités des poutres et qui en augmente simultanément la rigidité en torsion. Le cas échéant la rigidité de la liaison entre les plaques d'extrémité et les poutres est renforcée par au moins un élément raidisseur.

Pouf assurer les mouvements combinés des chariots X et des chariots Y qui déterminent la trajectoire complexe de la tête d'usinage suivant les axes X, Y et Z, les différents mouvements des chariots sont contrôlés par des moyens de commande numérique. En fonction des besoins des pièces à usiner, la tête d'usinage comporte au moins une broche d'entraînement d'un outil d'usinage dont l'axe peut être orienté suivant des directions différentes de la verticale Z.

L'invention concerne également une machine outil pour centre d'usinage particulièrement compact et performant qui comporte un dispositif d'usinage tel que décrit positionné dans un tunnel au plafond duquel est fixée la pièce à usiner, et dans lequel les chariots X se déplacent suivant l'axe X en prenant appui sur des moyens de guidage en X fixés aux parois latérales du tunnel.

La description détaillée d'un mode de réalisation d'un dispositif suivant l'invention est faite en référence aux figures qui représentent :
- Figure 1 :: une représentation en perspective des principaux éléments du dispositif assemblé ;
- Figure 2 :: une représentation en perspective d'une variante de réalisation du dispositif ;
- Figure 3 :: une vue partielle du dispositif ;
- Figure 4 :: une représentation schématique partielle d'un centre d'usinage mettant en oeuvre le dispositif dans un tunnel d'usinage ;
- Figure 5a :: une représentation schématique partielle d'un centre d'usinage mettant en oeuvre le dispositif dans un tunnel d'usinage et les moyens de convoyage des copeaux ;
- Figure 5b :: une vue de dessous du centre d'usinage mettant en oeuvre le dispositif dans un tunnel d'usinage ;
- Figure 6a :: une vue en perspective d'un centre d'usinage mettant en oeuvre deux dispositifs ;
- Figure 6b :: une vue d'agencement d'un centre d'usinage mettant en oeuvre deux dispositifs et leur moyen de manutention commun selon l'invention ;
- Figure 7 :: une vue d'agencement d'un centre d'usinage mettant en oeuvre quatre dispositifs et une zone de maintenance partagée.

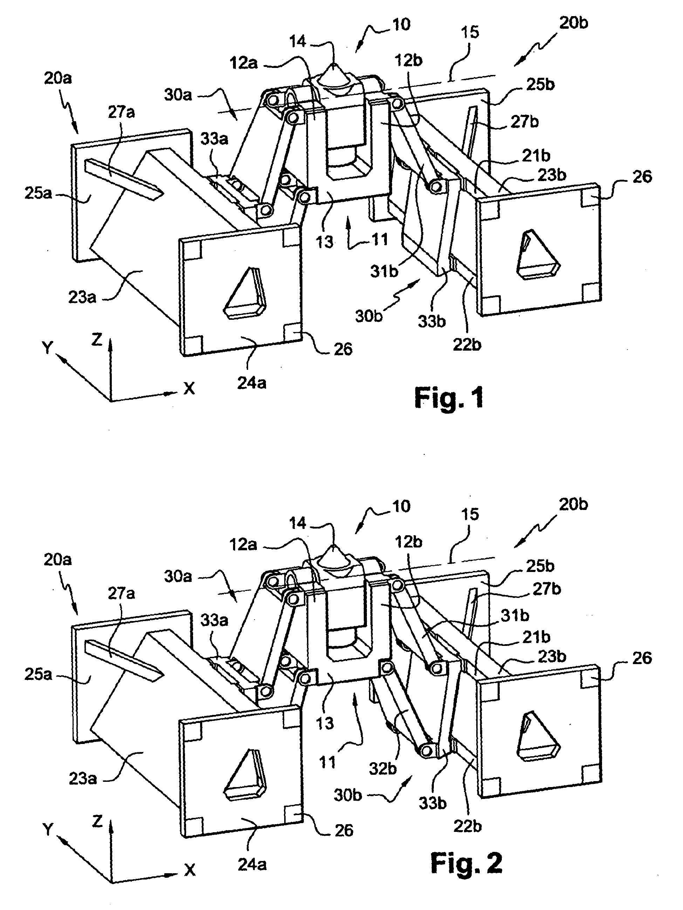

Comme montré sur la figure 1 le dispositif comporte une tête d'usinage 10, un premier et un second chariots 20a, 20b mobiles suivant un axe X sensiblement horizontal dits chariots X et des moyens de liaison 30a et 30b maintenant la tête d'usinage 10 en position par rapports aux chariots X, respectivement 20a et 20b.

Au moins un moyen de liaison 30a comporte au moins deux bielles 31a et 32a, chaque bielle étant articulée à une extrémité sur la tête d'usinage 10 et à l'autre extrémité sur un premier chariot 33a, ledit chariot, dit chariot Y, étant fixé mobile sur le premier chariot X 20a avec la possibilité de se déplacer le long dudit chariot X suivant une direction Y sensiblement horizontale et sensiblement perpendiculaire à l'axe X de déplacement dudit chariot.

Le second moyen de liaison 30b comporte au moins une bielle 31 b articulée à une extrémité sur la tête d'usinage 10 et à son autre extrémité sur un second chariot Y 33b, ledit chariot Y étant fixé mobile sur le second chariot X 20b avec la possibilité de se déplacer le long dudit chariot X suivant la direction Y.

Les bielles 31a, 32a, 31 b sont conçues avec une rigidité adaptée aux efforts statiques et dynamiques de l'usinage que doit réaliser la machine d'usinage équipé du dispositif. Chaque bielle est articulée de sorte que la tête d'usinage 10 soit mobile en translation verticale suivant un axe Z dans un repère lié à ladite tête, c'est à dire suivant une direction sensiblement perpendiculaire au plan défini par les directions de déplacement X et Y des chariots, et soit maintenue fixe suivant les autres axes tant de translation que de rotation. Ce résultat est obtenu d'une part en articulant les bielles de sorte que les bielles 31a, 32a entre le premier chariot Y 33a et la tête d'usinage 10 forment un parallélogramme articulé qui a pour effet de maintenir l'orientation de la tête d'usinage et d'autre part avec des axes d'articulation des bielles 31a, 32a, 31b sur la tête d'usinage 10 et sur les chariots Y 33a, 33b parallèles et sensiblement parallèles à l'axe Y.

Dans une forme particulière de réalisation illustrée sur la figure 2, le second moyen de liaison 30b comporte également au moins deux bielles 31 b, 32b articulées sur la tête d'usinage 10 et sur le chariot Y 33b de telle sorte que les dites deux bielles, le chariot X 33b et la tête d'usinage 10 forment un parallélogramme articulé similaire à celui formé par les bielles 31 a, 32a du premier moyen de liaison 30a.

De préférence, afin d'assurer la rigidité nécessaire suivant l'axe Y, chaque bielle a une forme de trapèze dont la petite base est articulée sur la tête d'usinage 10 au moyen de au moins deux chapes d'axe parallèle à l'axe Y et dont la grande base est articulée sur le chariot Y associé également au moyen de au moins de deux chapes d'axe parallèle à l'axe Y.

Chaque chariot Y 33a, 33b est fixé sur le chariot X correspondant 20a, 20b par des glissières 21a, 22a, respectivement 21b, 22b solidaires du chariot X correspondant qui permettent de déplacer le chariot Y en translation suivant la direction Y le long du chariot X sans autoriser d'autre mouvement relatif entre le chariot X et le chariot Y.

Chaque chariot X 20a, 20b comporte avantageusement une poutre 23a, respectivement 23b orientée suivant l'axe Y et terminée par deux plaques d'extrémité 24a et 25a, respectivement 24b et 25b. La poutre porte les glissières 21a, 22a, respectivement 21b; 22b. Les plaques 24a, 25a, 24b, 25b aux extrémités des poutres 23a et 23b participent à la, rigidité en torsion des poutres et supportent des moyens de guidage 26, par exemple des patins de guidage, destinés à coopérer avec la structure supportant les chariots X 20a et 20b.

Les poutres 23a et 23b doivent supporter les efforts d'usinage et avoir une rigidité suffisante pour éviter les vibrations incompatibles avec l'usinage.

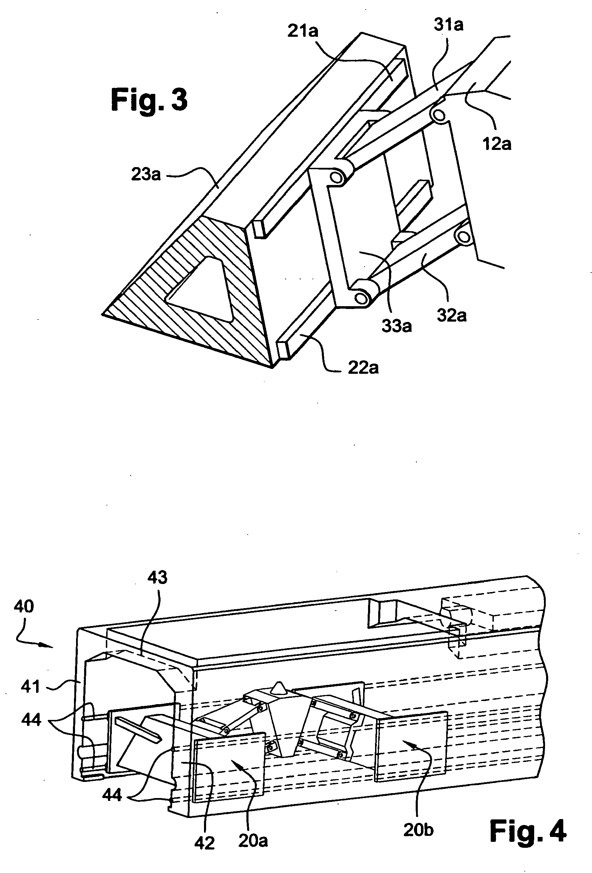

De telles rigidités sont relativement aisées à obtenir sans pénalité de masse en raison de la forme simple des poutres et de l'absence de structure mobile complexe telle qu'un portique. Par exemple, comme illustré sur la vue partielle de la figure 3, la poutre 23a, 23b a avantageusement une section fermée sensiblement triangulaire ou trapézoïdale qui lui confère une grande rigidité en flexion et les plaques d'extrémité solidaires de la poutre apporte une rigidité en torsion complémentaire à la forme de la section.

Chaque chariot X 20a, 20b est mobile suivant la direction X de déplacement Des moyens, non représentés, assurent le mouvement contrôlé des chariots X, par exemple des dispositifs d'entraînement en translation par des vis à billes ou par des crémaillères. Le déplacement en X des chariots X est un mouvement d'ensemble des deux chariots X dans lequel la distance séparant les deux chariots est constante ou un déplacement différentiel dans lequel la distance entre les deux chariots X varie ou une combinaison de ces deux mouvements.

Ces déplacements d'ensemble ou relatifs des deux chariots X peuvent être obtenus soit par un mouvement de chaque chariot X indépendant et un contrôle de la position de chaque chariot par rapport à une référence commune, soit par un mouvement absolu de l'un des chariots X et un mouvement relatif de l'autre chariot X par rapport au premier.

Chaque chariot Y 33a, 33b est mobile suivant la direction Y le long de la poutre 23a, respectivement 23b, de laquelle il est solidaire. Le mouvement contrôlé des chariots Y peut être assuré par tout moyen conventionnel, par exemple vis ou crémaillère. Dans une forme particulière de réalisation, un seul des chariots Y 33a ou 33b est entraîné suivant Y par lesdits moyens, le chariot Y non entraîné par ces moyens étant alors entraîné librement du fait de la rigidité en torsion des liaisons des bielles 31 a, 32a, 31b et 32b. Dans une autre forme de réalisation, les deux chariots Y 33a et 33b sont entraînés par des moyens synchronisés pour améliorer la précision de la position en Y de la tête d'usinage 10 et limiter la dissymétrie des efforts dans le dispositif.

La tête d'usinage 10 comporte une structure rigide 11 qui :
- comporte les points de reprise des bielles articulées 31 a et 32a, respectivement 31b et 32b, pour former les côtés 12a, respectivement 12b, du parallélogramme des moyens de liaison,
- assure une liaison rigide 13 entre les deux côtés 12a et 12b et donc entre les points de reprise des bielles 31a, 32a, 31 b, 32b.

Cette structure rigide 11, qui conserve une orientation constante en raison de la géométrie du ou des parallélogrammes formés par les bielles qui la supportent, porte une broche 14 pour entraîner en rotation un outil d'usinage (non représenté) autour de son axe. Cette broche d'usinage 14 est une broche conventionnelle, par exemple une électrobroche ou une broche hydraulique, qui est montée fixe sur la structure rigide 11 ou qui est montée articulée suivant un ou plusieurs axes si l'axe de l'outil doit être orientable pour les besoins de l'usinage. La figure 1 illustre le cas d'une broche 14 articulée en rotation sur la structure rigide 11 autour d'un axe 15 parallèle à l'axe de déplacement en X.

Le dispositif permet ainsi de déplacer la tête d'usinage 10 en translation suivant les trois axes principaux.

Un déplacement suivant l'axe X des chariots X 20a et 20b permet de déplacer la tête d'usinage 10 suivant l'axe X lorsque les chariots X sont déplacés simultanément avec une distance constante entre les chariots X.

Un déplacement suivant l'axe Z, axe perpendiculaire au plan défini par les axes de déplacement suivant X et suivant Y, de la tête d'usinage 10 est obtenu en faisant varier la distance entre les deux chariots X 20a et 20b.

Le déplacement combiné des chariots X 20a et 20b par des moyens conventionnels de commande numérique de machines outils permet donc d'obtenir aisément toutes les trajectoires dans le plan défini par les axes X et Z pour l'outil monté sur la tête d'usinage, dans les limites autorisées par les dimensions et la géométrie des moyens mis en oeuvre.

Le mouvement simultané des chariots Y 33a et 33b permet de déplacer la tête d'usinage suivant la direction Y dans les limites imposées par la longueur des poutres 23a et 23b.

L'ensemble de ces mouvements de translation est assuré par des moyens qu'il est possible de concevoir avec une grande rigidité sans que les éléments mobiles atteignent des masses importantes comme dans le cas des portiques.

En effet, comme illustré sur la figure 4, les chariots X 20a et 20b prennent appui pour leurs déplacements sur des moyens guidage fixes 44. Lesdits moyens de guidage fixes sont supportés par des structures 41, 42 fixes par rapport au sol et lesdites structures peuvent être renforcés autant que souhaitable, sans craindre des augmentations de la masse de l'ensemble mobile qui aurait des conséquences néfastes sur les performances dynamiques du dispositif.

Un dispositif suivant l'invention permet d'atteindre, lorsque le dispositif n'est pas en cours de réalisation d'un usinage, des vitesses de déplacement dix à vingt fois supérieures à celle d'un portique offrant des capacités d'usinage équivalentes tout en ayant une rigidité pendant les opérations d'usinage très supérieure. Cette vitesse de déplacement hors période d'usinage est essentielle car de nombreuses opérations, par exemple le changement d'outil ou le contrôle de la pièce en cours d'usinage, nécessite de déplacer la tête d'usinage provoquant des temps morts au regard de l'usinage proprement dit pouvant atteindre 50% du temps d'occupation de la machine sur les machines conventionnelles.

Des premiers essais montrent que le dispositif suivant l'invention, pour des capacités d'usinage équivalentes, procure sans difficulté en dynamique des rigidités meilleures que celles atteintes actuellement avec un portique en statique.

Les mouvements de la tête d'usinage et l'axe de l'outil d'usinage sont agencés pour usiner une pièce placée au-dessus des chariots X 20a et 20b et de la tête d'usinage 10. Ladite pièce à usiner est par exemple fixée au plafond 43 d'un tunnel d'usinage 40 dont la longueur n'est, en théorie, pas limitée et qui est avantageusement adaptée en fonction de la plus grande longueur des pièces à usiner en tenant compte des volumes nécessaires pour loger les différents éléments du dispositif qui s'étendent au-delà de la zone qui peut être atteinte par la tête d'usinage.

Avantageusement, le tunnel d'usinage 40 est de dimension suffisante pour accueillir la pièce 104 la plus grande à usiner, le dispositif d'usinage et ses mouvements, tant pendant les opérations d'usinage que pendant les opérations de maintenance.

De plus, pour un entretien plus facile du tunnel d'usinage, il est préférable de déplacer le dispositif d'usinage en dehors de sa zone de travail, par exemple à une des extrémités 123 du tunnel.

Le tunnel 40 étant fixe contrairement à un portique, il ne limite pas les accélérations des mouvements de la tête d'usinage. Les matériaux utilisés peuvent donc être très denses, antivibratoires, avec les épaisseurs nécessaires pour assurer la rigidité recherchée.

Lorsqu'un tunnel d'usinage 40 est mis en oeuvre, avantageusement les patins 26 des chariots X 20a et 20b prennent appui sur les moyens de guidage fixes 44 qui sont solidaires des parois latérales 41, 42 sensiblement verticales du tunnel 40.

Un avantage important de l'usinage en plafond, bien que pour brider la pièce à usiner il puisse être nécessaire de faire appel à des moyens spéciaux, concerne le dégagement naturel des copeaux de matière usinés qui tombent par gravité. Ainsi il n'est pas nécessaire de faire appel à un excès d'huile de coupe pour tenter d'entraîner les copeaux et il est possible de réaliser un usinage à sec sans craindre un endommagement de la pièce en cours d'usinage par les copeaux très chaud.

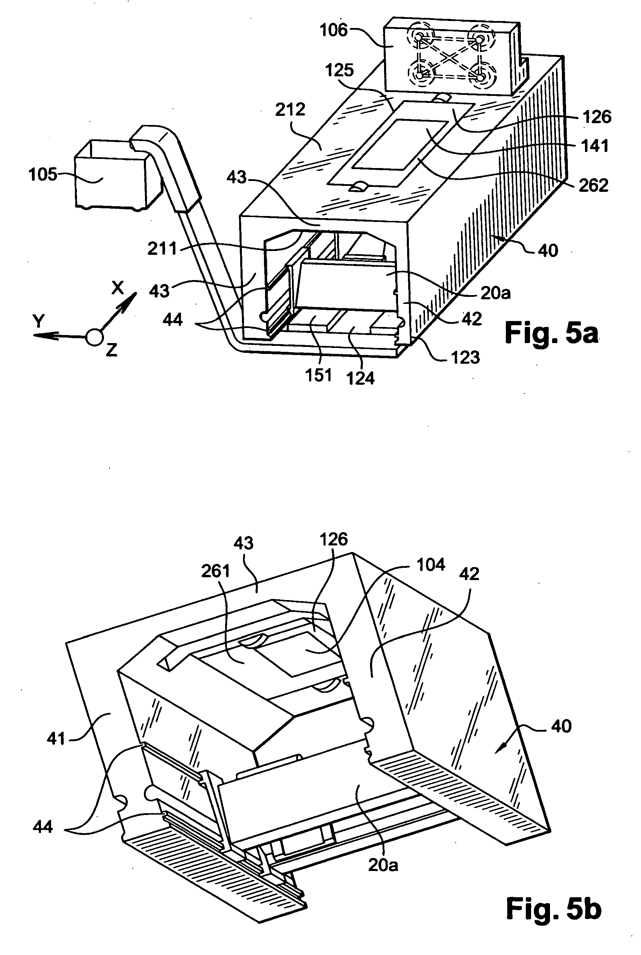

Avantageusement, comme illustrée sur la figure 5a, le tunnel d'usinage 40 est équipé d'un dispositif de récupération de copeaux 105, situé de préférence à une extrémité 123 du tunnel 40. Dans un exemple de réalisation, la récupération s'effectue par l'intermédiaire d'un moyen de convoyage de copeaux 151, par exemple un tapis, situé au dessous de la tête d'usinage, qui achemine lesdits copeaux vers ledit dispositif de récupération.

Avantageusement, afin de faciliter le chargement d'outils par l'opérateur, le tunnel 40 est équipée d'un magasin d'outils coupants 106.

Avantageusement, afin de permettre une gestion d'outils et un changement automatique de l'outil sans intervention d'un l'opérateur, le magasin 106 est équipé d'un dispositif de changement automatique d'outils.

De préférence, le magasin 106 et le dispositif de changement d'outils sont situés à une extrémité du tunnel, le magasin 106 étant fixé sur une partie supérieure du plafond 43 du tunnel 40, dit toit 212, et le dispositif de changement d'outils situé en dessous du magasin 106, dans le tunnel 40. Ledit magasin est dimensionné de sorte qu'il comporte le nombre d'outils nécessaires à la fabrication d'une pièce 104, sans nécessiter l'intervention de l'opérateur au cours du processus d'usinage.

Avantageusement, du fait de sa configuration fermée, le tunnel d'usinage 40 permet une lubrification à haute pression, par exemple avec des pressions supérieures à 15 bars, impossibles à utiliser sur des machines ouvertes dans un atelier. Le lubrifiant est naturellement évacué de la pièce 104 en cours d'usinage par gravité et facilite dans le même temps le drainage au sol des copeaux. De plus, ladite configuration permet de supprimer pratiquement la pollution de l'atmosphère de l'atelier par des huiles de coupe.

Dans un exemple de réalisation, comme illustrée sur la figure 5b, afin d'installer et de fixer la pièce 104 à usiner au plafond 43 du tunnel 40, ladite pièce est positionnée au plafond 43 au moyen d'un second chariot (non représenté), le dispositif d'usinage avec la tête d'usinage étant stocké à une extrémité 123 du tunnel. Un opérateur bride ensuite ladite pièce au plafond 43.

Dans un autre exemple de réalisation, le plafond 43 du tunnel 40 comporte une ouverture 125 pour accueillir une table 126, sur laquelle est maintenue, par des moyens conventionnels, la pièce 104 à usiner. Ladite table est soulevée du toit 212 au moyen d'un moyen de levage tel qu'un pont roulant (non représenté), puis déposée sur un support permettant de retourner ladite table afin de préparer la pièce. Ledit moyen de levage permet de remettre ensuite ladite table en appui dans l'ouverture 125. Avantageusement, des moyens, par exemple des brides, sont agencés pour fixer ladite table 126 sur le plafond 43 du tunnel pour éviter tout mouvement de la table 126 et donc de la pièce 104 pendant l'usinage.

Dans un autre exemple de réalisation, des opérations de préparation de pièces en temps masqué peuvent être réalisées en utilisant une table réversible 126. Cette table réversible permet de ne pas augmenter la surface occupée au sol par la machine pour la préparation des pièces. Ainsi, il est possible simultanément d'usiner une pièce 104 sur une face 261 de la table 126 et de préparer une autre pièce 41 sur une seconde face 262 opposée à la première face 261. Des moyens sont alors prévus pour pouvoir retourner la table.

Dans une forme particulière de cet exemple de réalisation, ladite table réversible pivote autour de son axe longitudinal.

Ladite table est nécessairement dimensionnée pour supporter tous les efforts d'usinage. De préférence, elle est suffisamment rigide pour que la mise en place des pièces 141 en temps masqué n'interfère pas avec les opérations d'usinage en cours à l'intérieur du tunnel, comme par exemple les vibrations lors du bridage des pièces 141.

Dans une première forme de réalisation du tunnel 40, afin de faciliter les opérations de chargement et de déchargement des pièces 141 sur la table 126, le toit 212 du tunnel 40 est sensiblement au niveau du sol de l'atelier ou légèrement surélevé. Le dispositif de récupération de copeaux 105 est de préférence situé au niveau du sol. Cette forme de réalisation permet d'obtenir un atelier aéré, avec une réduction notable de la pollution de l'atmosphère et du bruit dans l'atelier.

Dans une seconde forme de réalisation du tunnel 40, ledit tunnel 40 est assemblé au niveau du sol de l'atelier et un faux plancher, situé sensiblement au niveau du toit 212 du tunnel, permet de réaliser aisément les opérations de préparation de la pièce 141 en temps masqué, sur la face 262 de la table située à l'extérieur du tunnel 40. Le dispositif de récupération de copeaux 105 est de préférence situé à une des extrémités 123 du tunnel 40. Dans ce cas, il est avantageusement possible de prévoir une ouverture à une des extrémités du tunnel pour accéder facilement au tunnel 40 pour des opérations de maintenance et d'entretien.

Afin d'usiner plusieurs pièces simultanément, il est possible d'élargir le tunnel 40 et de monter deux têtes d'usinage sur le même dispositif d'usinage. Cependant, comme dans le cas des machines à portique conventionnelles, de nombreuses contraintes, telles que par exemple le couplage des têtes d'usinage (réglage sensiblement identique en hauteur des outils, sélection d'une même classe outils) ou l'arrêt de toutes les têtes d'usinage pour la maintenance d'une seule tète d'usinage, sont toujours existantes. Compte tenu de la simplicité relative et de la masse réduite du dispositif d'usinage, il est préférable d'utiliser deux dispositifs d'usinage indépendants avec chacun une tête d'usinage plutôt qu'un dispositif d'usinage comportant deux têtes d'usinage De plus, un tel agencement avec deux dispositifs d'usinage indépendants s'avère ne pas occuper sensiblement plus de place au sol qu'un dispositif d'usinage comportant deux têtes d'usinage.

Dans la conception pratique d'une telle machine il est particulièrement important de considérer les problèmes de rigidité qui ont un impact sur la qualité des usinages réalisés. Ainsi les différentes parties, poutres et bielles en particulier, qui influent sur la rigidité et le comportement vibratoire du dispositif comportent des raidisseurs en nombres et en positions adaptés en fonction des conditions d'usinage, efforts d'usinage et fréquences des vibrations, susceptibles d'être rencontrés.

Les liaisons articulées des bielles 31a, 32a, 31b, 32b comportent avantageusement des chapes, de préférence doubles, largement dimensionnées et intégrant des paires de roulements à rouleaux coniques montés en opposition pour obtenir une bonne rigidité des liaisons.

La rigidité de la liaison entre la poutre 23a, 23b et la plaque latérale 25a, respectivement 25b, est le cas échéant renforcé par un élément raidisseur 27a, respectivement 27b.

Les faces des poutres 23a et 23b qui servent d'appui aux chariots Y 33a et 33b respectivement sont avantageusement proches de la verticale, de préférence inclinées d'un angle inférieur à quarante cinq degrés par rapport au plan défini par les directions Y et Z, ce qui permet d'obtenir une meilleure rigidité de l'ensemble et une meilleure transmission des efforts qui assurent le mouvement en Z de la tête d'usinage (10).

Les moyens d'entraînement en translation des chariots Y 33a et 33b, par exemple des vis à billes, sont avantageusement positionnés au-dessus des chariots Y, dans la partie haute de la poutre 23a, 23b. Une telle disposition permet d'élever le centre de gravité du dispositif et de rapprocher ledit centre de gravité du centre d'inertie. La rigidité d'ensemble s'en trouve améliorée et les déformations au niveau de l'outil d'usinage sont réduites.

Dans un mode de réalisation, un centre d'usinage 111 à deux têtes d'usinage 10 comporte :
- deux tables d'usinage 126,
- un moyen de manutention 107,
- une aire de stockage des pièces 108.

Le moyen de manutention 107 est positionné de sorte à permettre audit moyen de manutention de réaliser l'ensemble des mouvements des pièces 141 destinées aux deux tables d'usinage 126.

L'aire de stockage 108 est, de préférence, agencée à une des extrémités des tables pour être partagée entre lesdites deux tables.

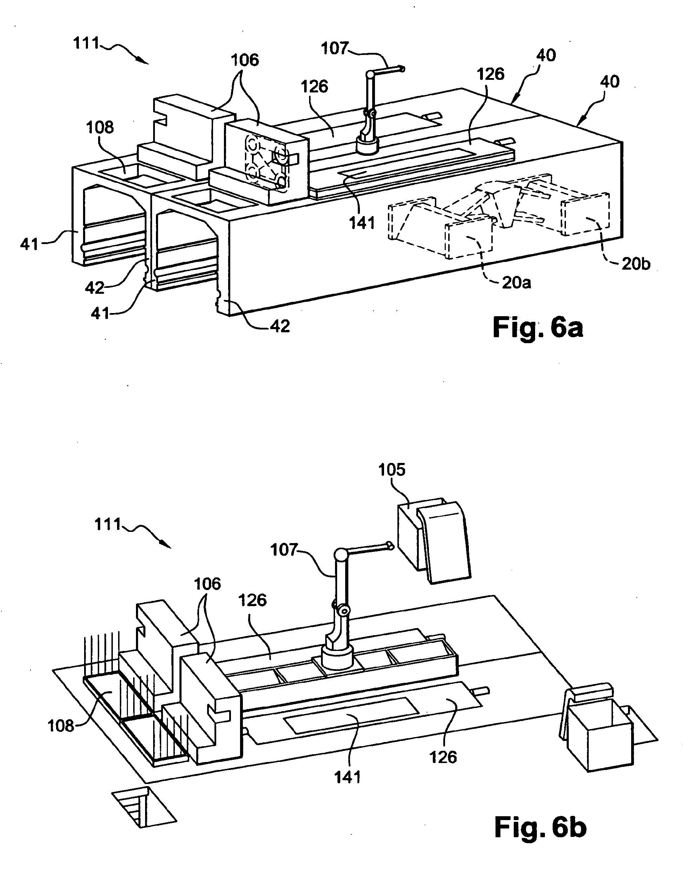

Dans un exemple de réalisation, comme illustré sur les figures 6a, 6b, deux tunnels 40, comportant chacun une table 126 et un dispositif d'usinage à une tête d'usinage 10, sont agencés avec leurs axes parallèles et leurs extrémités se situant dans des mêmes plans verticaux et sont accolés au niveau d'une de leur paroi latérale 41, 42. Cette configuration, dite bi-tunnel, permet un usinage simultané et indépendant de deux pièces avec une occupation minimale de la surface de l'atelier.

Dans une forme particulière de réalisation, les deux parois 41, 42 accolées ne forment qu'une paroi unique. Cette configuration bi-tunnel avec une paroi unique entre les deux tunnels, comportant avantageusement un raidisseur, permet de réduire l'épaisseur et la matière utilisée tout en maintenant la rigidité nécessaire.

Dans un autre exemple de réalisation, un seul tunnel 40, dont la longueur a été doublée, comporte les deux tables 126 dans le prolongement l'une de l'autre et les deux dispositifs d'usinage à une tête d'usinage. Les deux dispositifs d'usinage peuvent se déplacer sur toute la longueur du tunnel 40 et peuvent ainsi être utilisés indifféremment pour l'usinage sur l'une ou l'autre table 126. Ainsi, avec cette configuration d'un tunnel unique, une zone d'entretien (non représentée), de préférence située au centre du tunnel, peut être commune aux deux dispositifs d'usinage pour leur entretien. Avantageusement, les copeaux de chaque tunnel d'usinage 40 sont convoyés vers un dispositif 105 de récupération de copeaux commun.

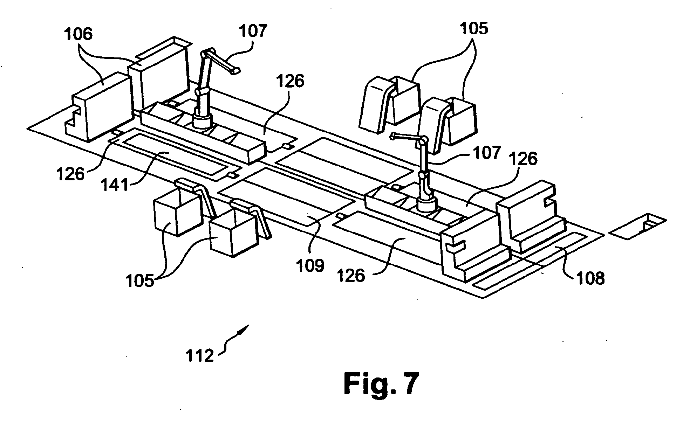

Dans un autre mode de réalisation, comme illustré sur la figure 7, un centre d'usinage 112 à quatre têtes d'usinage comporte :
- quatre tables 126,
- une zone de maintenance 109,
- deux moyens de manutention 107,
- deux aires de stockage des pièces 108.

Dans ce mode de réalisation, les quatre tables sont agencées de sorte à être parallèles deux à deux.

La zone de maintenance 109 est agencée de sorte à partager des moyens de commande et de gestion et se situe entre les tables alignées. Dans le cas où les plafonds des tunnels d'usinage sont sensiblement au niveau de sol de l'atelier, ladite zone de maintenance est aussi utilisée pour remonter et réaliser l'entretien nécessaire aux quatre dispositifs d'usinage.

Chaque moyen de manutention 107 est positionné de sorte à permettre à chaque moyen de manutention de réaliser l'ensemble des mouvements des pièces 141 destinées à deux tables 126 d'usinage.

Chaque aire de stockage 108 est agencée pour être partagée entre lesdites deux tables et se situe de préférence à l'extrémité de deux tables 126 opposée à la zone de maintenance 109.

Un tel agencement pour un centre d'usinage 112 à quatre têtes d'usinage permet d'usiner simultanément quatre pièces 104, sans les contraintes liées au couplage et pour une surface occupée au sol sensiblement identique voire moindre que les machines outils à portique à quatre têtes conventionnelles.

Dans un exemple de réalisation, deux configurations bi-tunnels, comme décrites précédemment, sont associées en parallèle. Chaque bi-tunnel comportant une paroi double accolée ou une paroi commune de séparation.

Dans un autre exemple de réalisation, deux tunnels 40 parallèles et indépendants, dont la longueur a été doublée et comportant chacun deux tables 126 dans le prolongement l'une de l'autre et deux dispositifs d'usinage à une tête d'usinage, sont accolés au niveau d'une de leur paroi latérale 41, 42 ou partagent une paroi commune de séparation. Les deux dispositifs d'usinage peuvent se déplacer sur toute la longueur du tunnel 40 et peuvent ainsi être utilisés indifféremment pour l'usinage sur l'une ou l'autre table 126.

De préférence, afin de surveiller d'éventuels incidents et d'assurer la sécurité à l'intérieur du tunnel, au moins une caméra de surveillance vidéo et au moins une commande d'arrêt d'urgence sont installées à l'intérieur du tunnel 40, avec un écran de contrôlé relié à la caméra et situé par exemple à proximité du poste de commande du centre d'usinage ou de la tête d'usinage concernée.

L'invention permet donc de réaliser une machine d'usinage à commande numérique plus rapide et plus performante que les machines conventionnelles à portique pour usiner les pièces placées sur des tables fixes.

## Revendications

1. Dispositif d'usinage comportant au moins une tête d'usinage (10) mobile suivant au moins trois axes de translation dits axe longitudinal X, axe transversal Y et axe vertical Z pour usiner une pièce immobile **caractérisé en ce que** :
- la pièce à usiner est fixée au-dessus de la tête d'usinage (10) suivant l'axe Z ;
- la tête d'usinage (10) est maintenue avec une orientation constante par des moyens de liaison (30a, 30b) comportant au moins trois bielles articulées (31a, 32a, 31b) ;
- deux bielles (31a, 32a) parmi les au moins trois forment avec la tête d'usinage (10) et avec un premier chariot Y (33a) sur lesquels elles sont articulées un premier parallélogramme articulé déformable dans le plan défini par les directions X et Z ;
- au moins une autre bielle (31b) parmi les au moins trois est articulée d'une part sur la tête d'usinage (10) et d'autre part sur un second chariot Y (33b), de sorte que l'ensemble articulé formé par la au moins une bielle (31b), la tête d'usinage (10) et le second chariot Y (33b) soit déformable dans le plan défini par les directions X et Z ;
- le premier chariot Y (33a) est mobile suivant une direction parallèle à l'axe Y sur un premier chariot X (20a) mobile suivant une direction parallèle à l'axe X ;
- le second chariot Y (33b) est mobile suivant une direction parallèle à l'axe Y sur un second chariot X (20b) mobile suivant une direction parallèle à l'axe X.

2. Dispositif suivant la revendication 1 comportant au moins quatre bielles articulées (31a, 31b, 32a, 32b) et dans lequel au moins deux bielles (32a, 32b) forment avec la tête (10) et le second chariot Y (33b) sur lesquels elles sont articulées un second parallélogramme articulé déformable dans le plan défini par les directions X et Z.

3. Dispositif suivant la revendication 1 ou la revendication 2 dans lequel la position suivant l'axe X de la tête d'usinage (10) est modifiée par une mouvement simultané des deux chariots X (20a, 20b) et dans lequel la position suivant l'axe Z de la tête d'usinage (10) est modifiée par un mouvement relatif entre les deux chariots X (20a, 20b).

4. Dispositif suivant l'une des revendications précédentes dont chaque bielle (31a, 32a, 31b, 32b) comporte au moins deux chapes à chacune de ses extrémités articulées dont les axes sont sensiblement parallèles à la direction Y.

5. Dispositif suivant l'une des revendications précédentes dont les bielles sont de formes trapézoïdales, la petite base étant articulée sur la tête d'usinage (10) et la grande base étant articulée sur le chariot Y (33a, 33b).

6. Dispositif suivant l'une des revendications précédentes dans lequel chaque chariot X (20a, 20b) comporte une poutre (23a, 23b) supportant des glissières (21a, 22a, 21b, 22b) parallèles à l'axe Y sur lesquelles coulissent les chariots Y (33a, 33b).

7. Dispositif suivant la revendication 6 dans lequel les poutres (23a, 23b) ont une section fermée sensiblement triangulaire ou trapézoïdale.

8. Dispositif suivant la revendication 6 ou la revendication 7 dans lequel les faces des poutres (23a, 23b) sur lesquelles coulissent les chariots Y (33a, 33b) sont inclinées par rapport à la verticale d'une valeur inférieure ou égale à 45 degrés.

9. Dispositif suivant l'une des revendications précédentes dans lequel les chariots X (20a, 20b) comportent des moyens de guidage (26) des déplacements suivant l'axe X.

10. Dispositif suivant l'une des revendications précédentes dans lequel la tête d'usinage (10) comporte au moins une broche d'entraînement (14) d'un outil d'usinage dont l'axe peut être orienté suivant des directions différentes de la verticale Z.

11. Machine outil pour l'usinage de pièces fixes pendant les opérations d'usinage, comportant un dispositif suivant l'une des revendications précédentes dans laquelle le dispositif est positionné dans un tunnel (40) au plafond (43) duquel est fixée la pièce à usiner, et dans lequel les chariots X (20a, 20b) se déplacent suivant l'axe X en prenant appui sur des moyens de guidage en X (44) fixés aux parois latérales (41, 42) du tunnel (40).

12. Machine outil suivant la revendication 11 dans laquelle la longueur du tunnel (40) est supérieure à la longueur de la plus grande pièce (104) à usiner de telle sorte à permettre un déport du dispositif d'usinage hors de la zone d'usinage.

13. Machine outil suivant l'une des revendications 11 ou 12 comportant des moyens (151) pour convoyer des copeaux générés pendant l'usinage de la pièce (104) à l'une des extrémités (123) du tunnel vers un dispositif de récupération de copeaux (105).

14. Machine outil suivant l'une des revendications 11 à 13 dans laquelle le plafond (43) du tunnel (40) comporte une ouverture (125) apte à accueillir une table (126) sur laquelle est maintenue la pièce (104) à usiner.

15. Machine outil suivant la revendication 14 dans laquelle la table (126) est réversible et pivote autour d'un axe horizontal.

## Claims

1. Machining device comprising at least one machining head (10) that is movable on at least three axes of translation, termed the longitudinal axis X, the transverse axis Y and the vertical axis Z, for machining an immobile workpiece, said machining device being **characterized in that**:
- the workpiece is fixed above the machining head (10) on the Z axis;
- the machining head (10) is kept in a constant orientation by connection means (30a, 30b) comprising at least three hinged links (31a, 32a, 31b);
- two links (31a, 32a) of the three or more links form with the machining head (10) and with a first Y carriage (33a) to which they are hinged a first parallelogram that is deformable in the plane defined by the X and Z directions;
- at least one other link (31b) of the three or more links is hinged both to the machining head (10) and also to a second Y carriage (33b), so that the hinged assembly formed by the at least one link (31b), the machining head (10) and the second Y carriage (33b) is deformable in the plane defined by the X and Z directions;
- the first Y carriage (33a) is movable in a direction parallel to the Y axis on a first X carriage (20a) that is movable in a direction parallel to the X axis; and
- the second Y carriage (33b) is movable in a direction parallel to the Y axis on a second X carriage (20b) that is movable in a direction parallel to the X axis.

2. Device according to Claim 1 comprising at least four hinged links (31a, 31b, 32a, 32b) and in which at least two links (32a, 32b) form with the head (10) and with the second Y carriage (33b) to which they are hinged a second hinged parallelogram that is deformable in the plane defined by the X and Z directions.

3. Device according to Claim 1 or Claim 2, in which the position along the X axis of the machining head (10) is modified by a simultaneous movement of both X carriages (20a, 20b), and in which the position along the Z axis of the machining head (10) is modified by a relative movement of the two X carriages (20a, 20b) with respect to each other.

4. Device according to one of the preceding claims, in which each link (31a, 32a, 31b, 32b) comprises at least two clevises at each of its hinged ends, whose axes are essentially parallel to the Y direction.

5. Device according to one of the preceding claims, in which the shapes of the links are trapezoidal, the short base being hinged to the machining head (10) and the long base being hinged to the Y carriage (33a; 33b).

6. Device according to one of the preceding claims, in which each X carriage (20a, 20b) comprises a beam (23a, 23b) on which sliding tracks (21a, 22a, 21b, 22b) are mounted parallel to the Y axis and on which the Y carriages (33a, 33b) run.

7. Device according to Claim 6, in which the beams (23a, 23b) have an essentially triangular or trapezoidal closed cross section.

8. Device according to Claim 6 or Claim 7, in which the faces of the beams (23a, 23b) on which the Y carriages (33a, 33b) run are inclined by less than or equal to 45° relative to the vertical.

9. Device according to one of the preceding claims, in which the X carriages (20a, 20b) comprise guide means (26) for guiding travel along the X axis.

10. Device according to one of the preceding claims, in which the machining head (10) comprises at least one drive spindle (14) for a machining tool whose axis can be oriented along directions other than the vertical Z.

11. Machine tool for machining fixed workpieces during machining operations, comprising a device according to one of the preceding claims, in which machine tool the device is positioned in a tunnel (40), with the workpiece fixed to its ceiling (43), and wherein the X carriages (20a, 20b) travel along the X axis, being supported on guide means (44) in the X direction fixed to the side walls (41, 42) of the tunnel (40).

12. Machine tool according to Claim 11, in which the length of the tunnel (40) is greater than the length of the largest workpiece (104) so as to allow the machining device to extend out of the machining zone.

13. Machine tool according to either of Claims 11 and 12, comprising means (151) for conveying chips generated during the machining of the workpieces (104) to one of the ends (123) of the tunnel towards a chip collection device (105).

14. Machine tool according to one of Claims 11-13, in which the ceiling (43) of the tunnel (40) comprises an opening (125) capable of accommodating a table (126) on which the workpiece (104) is held.

15. Machine tool according to Claim 14, in which the table (126) is reversible and pivots about a horizontal axis.

## Patentansprüche

1. Bearbeitungsvorrichtung mit mindestens einem Bearbeitungskopf (10), der entlang mindestens dreier Translationsachsen, und zwar einer Längsachse X, einer Querachse Y und einer vertikalen Achse Z, beweglich ist, um ein unbewegliches Element zu bearbeiten, **dadurch gekennzeichnet, dass**
- das zu bearbeitende Element über dem Bearbeitungskopf (10) entlang der Achse Z befestigt ist,
- der Bearbeitungskopf (10) durch Verbindungsmittel (30a, 30b), die mindestens drei gelenkige Verbindungsstangen (31a, 32a, 31b) umfassen, mit einer konstanten Ausrichtung gehalten wird,
- unter den mindestens drei Verbindungsstangen zwei (31a, 32a) mit dem Bearbeitungskopf (10) und einem ersten Karren Y (33a), an denen sie angelenkt sind, ein erstes gelenkiges Parallelogramm bilden, das in der durch die Richtungen X und Z definierten Ebene deformierbar ist,
- mindestens eine andere Verbindungsstange (31b) unter den mindestens drei einerseits am Bearbeitungskopf (10) und andererseits an einem zweiten Karren Y (33b) angelenkt ist, so dass die durch die mindestens eine Verbindungsstange (31b), den Bearbeitungskopf (10) und den zweiten Karren Y (33b) gebildete gelenkige Anordnung in der durch die Richtungen X und Z definierten Ebene deformierbar ist,
- der erste Karren Y (33a) entlang einer parallel zur Achse Y verlaufenden Richtung auf einem ersten Karren X (20a) beweglich ist, der entlang einer parallel zur Achse X verlaufenden Richtung beweglich ist, und
- der zweite Karren Y (33b) entlang einer parallel zur Achse Y verlaufenden Richtung auf einem zweiten Karren X (20b) beweglich ist, der entlang einer parallel zur Achse X verlaufenden Richtung beweglich ist.

2. Vorrichtung nach Anspruch 1, die mindestens vier gelenkige Verbindungsstangen (31a, 31b, 32a, 32b) umfasst und bei der mindestens zwei Verbindungsstangen (32a, 32b) mit dem Kopf (10) und dem zweiten Karren Y (33b), an denen sie angelenkt sind, ein zweites gelenkiges Parallelogramm bilden, das in der durch die Richtungen X und Z definierten Ebene deformierbar ist.

3. Vorrichtung nach Anspruch 1 oder 2, bei der die Position gemäß der Achse X des Bearbeitungskopfs (10) durch eine gleichzeitige Bewegung der beiden Karren X (20a, 20b) modifiziert wird und bei der die Position gemäß der Achse Z des Bearbeitungskopfs (10) durch eine Relativbewegung zwischen den beiden Karren X (20a, 20b) modifiziert wird.

4. Vorrichtung nach einem der vorhergehenden Ansprüche, bei der jede Verbindungsstange (31a, 32a, 31b, 32b) an jedem ihrer angelenkten Enden mindestens zwei Gabeln umfasst, deren Achsen im Wesentlichen parallel zur Richtung Y verlaufen.

5. Vorrichtung nach einem der vorhergehenden Ansprüche, deren Verbindungsstangen trapezförmig sind, wobei die kleine Basis am Bearbeitungskopf (10) und die große Basis am Karren Y (33a, 33b) angelenkt ist.

6. Vorrichtung nach einem der vorhergehenden Ansprüche, bei der jeder Karren X (20a, 20b) einen Träger (23a, 23b) umfasst, der parallel zur Achse Y verlaufende Schienen (21a, 22a, 21b, 22b) stützt, auf denen die Karren Y (33a, 33b) gleiten.

7. Vorrichtung nach Anspruch 6, bei der die Träger (23a, 23b) ein im Wesentlichen dreieckiges oder trapezförmiges geschlossenes Profil haben.

8. Vorrichtung nach Anspruch 6 oder 7, bei der die Flächen der Träger (23a, 23b), auf denen die Karren Y (33a, 33b) gleiten, in einem Winkel von kleiner-gleich 45 Grad bezüglich der Vertikalen geneigt sind.

9. Vorrichtung nach einem der vorhergehenden Ansprüche, bei der die Karren X (20a, 20b) Mittel (26) zur Führung der Verschiebungen entlang der Achse X umfassen.

10. Vorrichtung nach einem der vorhergehenden Ansprüche, bei der der Bearbeitungskopf (10) mindestens eine Antriebsspindel (14) eines Bearbeitungswerkzeugs umfasst, deren Achse entlang von der Vertikalen Z verschiedenen Richtungen ausgerichtet sein kann.

11. Werkzeugmaschine zur Bearbeitung von fixierten Elementen bei Bearbeitungsvorgängen, die eine Vorrichtung nach einem der vorhergehenden Ansprüche umfasst und bei der die Vorrichtung in einem Tunnel (40) positioniert ist, an dessen Decke (43) das zu bearbeitende Element befestigt ist und in dem sich die Karren X (20a, 20b) entlang der Achse X bewegen, indem sie sich auf Mitteln (44) zur Führung in X-Richtung abstützen, die an den Seitenwänden (41, 42) des Tunnels (40) befestigt sind.

12. Werkzeugmaschine nach Anspruch 11, bei der der Tunnel (40) länger als das längste zu bearbeitende Element (104) ist, so dass eine Verschiebung der Bearbeitungsvorrichtung aus dem Bearbeitungsbereich gestattet ist.

13. Werkzeugmaschine nach Anspruch 11 oder 12, mit Mitteln (151) zur Beförderung der bei der Bearbeitung des Elements (104) an einem der Enden (123) des Tunnels erzeugten Späne zu einer Vorrichtung (105) zum Auffangen von Spänen.

14. Werkzeugmaschine nach einem der Ansprüche 11 bis 13, bei der die Decke (43) des Tunnels (40) eine Öffnung (125) umfasst, die geeignet ist, einen Tisch (126) aufzunehmen, auf dem das zu bearbeitende Element (104) gehalten wird.

15. Werkzeugmaschine nach Anspruch 14, bei der der Tisch (126) umkehrbar ist und um eine horizontale Achse schwenkt.
